# EUROPEAN PATENT SPECIFICATION

(11) **EP 4 438 678 B1**
(45) Date of publication and mention of the grant of the patent: **28.10.2026**
(21) Application number: 22895834.4
(22) Date of filing: 27.09.2022
(51) Int. Cl.: C08L 53/00, C08L 23/00, C08L 23/16, H01B 3/44, H01B 9/00, C08L 23/12

(54) **POLYPROPYLENE RESIN COMPOSITION FOR INSULATING LAYER OF POWER CABLE WITH EXCELLENT WHITENING RESISTANCE AND MOLDED ARTICLE USING SAME**
POLYPROPYLENHARZZUSAMMENSETZUNG FÜR EINE ISOLIERSCHICHT EINES STROMKABELS MIT HERVORRAGENDER AUFHELLUNGSBESTÄNDIGKEIT UND FORMARTIKEL DAMIT
COMPOSITION DE RÉSINE DE POLYPROPYLÈNE POUR COUCHE ISOLANTE DE CÂBLE ÉLECTRIQUE AYANT UNE EXCELLENTE RÉSISTANCE AU BLANCHIMENT ET ARTICLE MOULÉ L'UTILISANT

(30) Priority: 22.11.2021 KR 20210161553
(43) Date of publication of application: 02.10.2024
(73) Proprietor: Lotte Chemical Corporation, Seoul 05551 (KR)
(72) Inventor: KIM, Youn Kyoung, Daejeon 34110 (KR); YOON, Bo Sang, Daejeon 34110 (KR); SEO, Kyo Un, Daejeon 34110 (KR)
(74) Representative: Germain Maureau
(86) International application number: PCT/KR2022/014482
(87) International publication number: WO 2023/090625

(56) References cited:
- EP-A1- 3 470 462
- KR-A- 20010 043 846
- KR-A- 20190 064 279
- KR-A- 20190 127 970
- KR-A- 20200 077 147
- KR-B1- 101 859 852
- US-B2- 9 181 423

## Description

### TECHNICAL FIELD

The present invention relates to a resin composition for an insulating layer of an eco-friendly power cable, and more particularly, to a resin composition for an insulating layer of an eco-friendly power cable, which has excellent flexibility and electrical properties, and is recyclable.

### BACKGROUND ART

As an insulation material of a power cable, a material obtained by cross-linking polyethylene (PE), polyvinyl chloride (PVC), ethylene-propylene rubber (EPR), or the like is mainly used. Among them, cross-linked polyethylene (XLPE) is obtained by converting a linear molecular structure of polyethylene into a three-dimensional network structure through a cross-linking process, and has excellent mechanical properties and chemical resistance properties of typical polyethylene while having improved heat resistance, and thus, has been used as an insulating layer for a high-voltage power cable. However, cross-linked polyethylene is a cross-linked polymer, and thus, is not recyclable, and should be incinerated to be disposed, and thus, is not quite environmentally friendly.

Recently, development of a resin for an insulating layer applicable to a distribution line (22.9 kv or greater) using a polypropylene (PP) material, which is easy to recycle and has high heat resistance, has been underway. Compared to an XLPE insulating layer, a polypropylene insulating layer is known to have a simple manufacturing method, to be environmentally friendly due to the non-crosslinked form thereof, and to have excellent performance such as heat resistance and usability. Toxic substances such as methane gas and various by-products are not generated during a manufacturing process of the polypropylene insulating layer, and greenhouse gases such as CO₂ generated during the manufacturing process may be reduced by 30% compared to XLPE. In addition, the polypropylene insulating layer is recyclable, and is highly heat resistant, and thus, is capable of increasing a power transmission capacity, which is advantageous.

However, a power cable including a polypropylene insulating layer has a problem of being poor in cable installation properties due to low flexibility caused by high rigidity, which is a unique characteristic of polypropylene, and being slightly insufficient in electrical properties compared to the XLPE. Therefore, there is a need to develop a composition for an insulating layer, which is environmentally friendly and has high stiffness of polypropylene and improved electrical properties.

Recently, there have been attempts to improve flexibility and electrical properties by using an olefin-based rubber in a polypropylene material. However, a polypropylene material and an olefin-based rubber have heterogeneous properties and do not mix with each other, so that there is a boundary between a matrix phase and a domain, and there is a problem in that tension is applied to the boundary during power line installation, causing the generation of microcrazes in an interface boundary region, thereby causing a whitening phenomenon.

International Patent Publication No. WO2013/148028 discloses a polypropylene blend for a thermoplastic insulator in which ethylene, α-olefin, EPDM, and the like are mixed with polypropylene, and the change in AC breakdown voltage strength according to the cooling rate, but there is no mention of improving heat resistance and softness of the composition, and there may be a problem such as breakage due to poor softness during installation.

Korean Patent Laid-open Publication No. 2014-0040082 discloses a thermoplastic polymer material with softness secured by mixing an α-olefin comonomer rubber phase and a propylene copolymer, but there is a problem in that if the content of the rubber phase is low, softness decreases when used as an insulating material, making construction and installation difficult, and if the content of the rubber phase is high, the advantage of polypropylene, which influences mechanical properties, is lost, and there is a problem in that insulation breakdown strength decreases due to whitening which may occur to a resin composition with heterogeneous properties. EP 3 470 462 A1 also discloses an insulating composition for cables.

### DISCLOSURE OF THE INVENTION

### TECHNICAL PROBLEM

An aspect of the present invention provides a resin composition for an insulating layer of a recyclable power cable, and a molded article using the resin composition, wherein the resin composition for an insulating layer of a power cable has excellent whitening resistance while satisfying excellent flexibility and electrical properties.

### TECHNICAL SOLUTION

According to an aspect of the present invention, there is provided a polypropylene resin composition for an insulating layer of a power cable, wherein the polypropylene resin composition includes 70 parts by weight to 90 parts by weight of a propylene block copolymer in which ethylene-propylene rubber (EPR) is dispersed in a propylene-ethylene random copolymer, 5 parts by weight to 20 parts by weight of a polyolefin elastomer (POE), and 5 parts by weight to 20 parts by weight of high molecular weight atactic polypropylene (PP) having a weight average molecular weight of 100,000 g/mol or greater.

In addition, the present invention provides a polypropylene resin composition for an insulating layer of a power cable, wherein an ethylene-derived repeating unit of the propylene block copolymer is included in an amount of 0.1 wt% to 5 wt% in the propylene-ethylene random copolymer, is included in an amount of 30 wt% to 60 wt% in the ethylene-propylene rubber (EPR), and is included in an amount of 5 wt% to 25 wt% in the propylene block copolymer.

In addition, the present invention provides a polypropylene resin composition for an insulating layer of a power cable, wherein the propylene block copolymer has a melting point of 150 °C to 170 °C, an enthalpy of fusion of 65 J/g to 85 J/g, a melt index (MI, 230 °C, 2.16 kg load) of 0.1 g/10min to 10 g/10min, and a xylene soluble of 15 wt% to 50 wt% in the propylene block copolymer.

In addition, the present invention provides a polypropylene resin composition for an insulating layer of a power cable, wherein the propylene block copolymer is obtained by reacting propylene and ethylene in a loop reactor to polymerize a propylene-ethylene random copolymer, and then continuously polymerizing propylene and ethylene in a gas phase reactor in the presence of the propylene-ethylene random copolymer to disperse ethylene-propylene rubber (EPR) in the propylene-ethylene random copolymer.

In addition, the present invention provides a polypropylene resin composition for an insulating layer of a power cable, wherein the polyolefin elastomer includes two or more selected from the group consisting of an ethylene-derived repeating unit, a propylene-derived repeating unit, and a (C4-C12) alpha-olefin-derived repeating unit, and includes the ethylene-derived repeating unit or the propylene-derived repeating unit.

In addition, the present invention provides a polypropylene resin composition for an insulating layer of a power cable, wherein the resin composition has a white index of 40 or less, as measured according to the following method.

### [Method for measuring white index]

The resin composition is prepared in the form of a sheet having a thickness of 2 mm at 230 °C by using a press molding machine, and then cooled at 10 °C for 5 minutes to prepare a sample (60×45×2 mm), and then the sample is subjected to bending evaluation performed by applying a force of 10 N, and the white index of the sample, which has been subjected to the bending evaluation, is measured according to the ASTM E313 standard by using a spectrophotometry device (Ecolorplus Co., 7000A_IQPC).

In addition, the present invention provides a polypropylene resin composition for an insulating layer of a power cable, wherein the resin composition has a flexural modulus of 300 MPa to 550 MPa, an AC dielectric breakdown strength of 50 kV/mm or greater, and an impulse dielectric breakdown strength of 90 kV/mm or greater, as measured according to the following method.

### [Method for measuring flexural modulus]

According to the ASTM D790 standard, the support span of a specimen (127×12.7×6.4 mm) is fixed at 100 mm, and a flexural load is applied at a rate of 28 mm/min to determine a measured value as the flexural modulus.

### [Method for measuring dielectric breakdown strength]

The resin composition is prepared in the form of a sheet having a thickness of 1 mm by using a press molding machine, and then cooled at 10 °C for 5 minutes, and then according to the ASTM D149 standard, 30 kV is initially applied for 5 minutes, and thereafter, is increased by 10 kV and maintained for 5 minutes, the process of which is repeated until insulation breakdown occurs, and when the insulation breakdown occurs, the voltage at that time is determined as AC dielectric breakdown strength, and an impact voltage of 80 kV is applied to the sheet in positive/negative polarity 10 times each, and thereafter, the impact voltage is increased by 10 kV and an impulse voltage is applied 3 times, the process of which is repeated until breakdown occurs, and when the insulation breakdown occurs, the voltage at that time is determined as impulse breakdown strength.

According to another aspect of the present invention, there is provided a power cable including the resin composition as an insulating layer.

### ADVANTAGEOUS EFFECTS

The present invention may provide a resin composition for an insulating layer of a power cable, and a power cable using the resin composition, wherein the resin composition is a resin composition for an insulating layer of a recyclable power cable and satisfies excellent flexibility properties and electrical properties and has excellent whitening resistance by using a propylene block copolymer in which ethylene-propylene rubber (EPR) is dispersed in a propylene-ethylene random copolymer, and high molecular weight atactic polypropylene in a polyolefin elastomer.

### BRIEF DESCRIPTION OF THE DRAWINGS

FIG. 1 is a diagram schematically showing a cross-section of a power cable manufactured using a resin composition according to the present invention.
FIG. 2 is a photograph showing the result of observing a cross-section of a sample by using an optical microscope, the sample which has been subjected to bending evaluation in a test example.

### BEST MODE FOR CARRYING OUT THE INVENTION

The present invention discloses a polypropylene resin composition for an insulating layer of a power cable, wherein the polypropylene resin composition includes 70 parts by weight to 90 parts by weight of a propylene block copolymer in which ethylene-propylene rubber (EPR) is dispersed in a propylene-ethylene random copolymer, 5 parts by weight to 20 parts by weight of a polyolefin elastomer (POE), and 5 parts by weight to 20 parts by weight of high molecular weight atactic polypropylene (PP) having a weight average molecular weight of 100,000 g/mol or greater.

Hereinafter, each component of the resin composition for an insulating layer of a power cable according to the present invention will be described in detail.

Polypropylene may be classified into a homo polypropylene (H-PP), a propylene random copolymer (R-PP) and a propylene block copolymer (B-PP). Among them, the propylene random copolymer and the propylene block copolymer have higher flexibility and flexural properties than the homo polypropylene, and thus, are more suitable for a power cable, and here, the propylene block copolymer has the advantage of being excellent in flexibility and flexural properties compared to the propylene random copolymer, so that the propylene block copolymer is used in the present invention.

In the present invention, the propylene block copolymer is a kind of a reactor-made thermoplastic polyolefin elastomer (RTPO), and refers to a polymer including a polymer which exhibits a plurality of rubber properties in the polymer including a unit derived from a propylene monomer.

In the present invention, the propylene block copolymer is obtained by reacting propylene and ethylene in a loop reactor to polymerize a propylene-ethylene random copolymer, and then subjecting gases of propylene and ethylene to a copolymerization reaction in a gas phase reactor in the presence of the propylene-ethylene random copolymer by continuous polymerization to disperse the ethylene-propylene rubber (EPR) in the propylene-ethylene random copolymer, and due to the preparation through continuous polymerization as described above, it is possible to uniformly disperse the ethylene-propylene rubber (EPR) into small-sized domains inside a polypropylene matrix.

Here, in the present invention, the size and degree of dispersion of the domains of the ethylene-propylene rubber (EPR) are not limited, but in consideration of the flexibility and electrical properties of a final resin composition. the average size of the domains may be 0.1 µm to 5 µm, preferably 0.5 µm, to 2 µm, and the dispersion degree of the domains may be 0.1 to 0.7, preferably 0.2 to 0.6. The size and degree of dispersion of the domains may be measured by compression-molding (4 min at 220°C) the resin composition to prepare a specimen and cutting the prepared specimen to 1 mm wide and 10 cm long, and then immersing the cut specimen in xylene at 60 °C to elute ethylene-propylene rubber, followed by analyzing voids present on the surface of the specimen by scanning electron microscopy (SEM).

In the present invention, the propylene block copolymer may include 50 wt% to 85 wt% of the propylene-ethylene random copolymer and 15 wt% to 50 wt% of the ethylene-propylene rubber, and preferably, may include 60 wt% to 75 wt% of the propylene-ethylene random copolymer and 25 wt% to 40 wt% of the ethylene-propylene rubber. The propylene block copolymer is a form in which ethylene-propylene rubber particles are dispersed in a propylene-ethylene random copolymer matrix. Specifically, the propylene block copolymer may be a block copolymer in which an ethylene-propylene rubber is polymerized in a stepwise manner in a propylene-ethylene random copolymer in a reactor. The propylene block copolymer has the ethylene-propylene rubber dispersed in a specific content range, and thus, has a lower flexural modulus than the propylene homopolymer or the propylene-ethylene random copolymer, so that when applied as an insulating layer of a power cable, flexibility improvement may be maximized, and strength may be improved due to excellent elasticity.

In the present invention, the propylene block copolymer is obtained by producing a large amount of ethylene-propylene rubber (EPR) by using a high-content ethylene in a polymerization reactor, and includes a repeating unit derived from a high content of ethylene-propylene rubber (EPR) compared to a typical propylene block copolymer, and thus, has the advantage of having high strength and excellent flexibility.

Although not limited by theory, in general, a propylene block copolymer prepared in a reactor may have a content of an ethylene-derived repeating unit of 5 wt% to 25 wt%, preferably 10 wt% to 20 wt, in the total block copolymer due to technical difficulties. In addition, the content of the ethylene-derived repeating unit may be 0.1 wt% to 5 wt%, preferably 0.1 wt% to 3 wt%, more preferably 0.5 wt% to 2 wt%, in the propylene-ethylene random copolymer, and may be 30 wt% to 60 wt%, preferably 40 wt% to 50 wt%, in the ethylene-propylene rubber (EPR). The flexibility, flexural properties, and electrical properties may be maximized in the above-described content range of the ethylene-derived repeating unit. In addition, if the content of the ethylene-derived repeating unit is greater than 5 wt% in the propylene-ethylene random copolymer, the melting point of the block copolymer is lowered, so that the heat resistance stability may be degraded.

In addition, the propylene block copolymer may have a melting point of 150 °C to 170 °C, preferably 160 °C to 170 °C. In addition, the enthalpy of fusion may be 65 J/g to 85 J/g, preferably 75 J/g to 85 J/g. If the melting point and the enthalpy of fusion of the propylene block copolymer satisfy the above-described ranges, when applied as an insulating layer of a power cable, flexibility and electrical properties to be implemented in the present invention may be satisfied.

In addition, the propylene block copolymer may have a melt index MI (230 °C, 2.16 kg load) of 0.1 g/10 min to 10 g/10 min, preferably 0.3 g/10 min to 5 g/10 min, and more preferably 0.5 g/10 min to 2 g/10 min. If the melt index is less than 0.1 g/10 min, an extruder may be overloaded during a cable extrusion, and if greater than 10 g/10 min, insulating layer eccentricity of a cable molded article may occur.

In addition, the propylene block copolymer may have a xylene soluble (X.S.) of 15 wt% to 50 wt%, preferably 25 wt% to 40 wt%, in the propylene block copolymer. The xylene soluble is in accordance with the content of the ethylene-propylene rubber (EPR) included in the propylene block copolymer, and the flexibility, flexural properties, and electrical properties may be maximized in the above-described content range.

In the present invention, the propylene block copolymer may be included in an amount of 70 parts by weight to 90 parts by weight, preferably 75 parts by weight to 85 parts by weight. If the content of the propylene block copolymer is less than 70 parts by weight, the electrical properties may be degraded and whitening may occur, and if greater than 90 parts by weight, the flexibility is degraded.

In the present invention, a polyolefin elastomer (POE) is included as a modifier for improving the flexibility and flexural properties of a final resin composition.

The polyolefin elastomer includes two or more selected from the group consisting of an ethylene-derived repeating unit, a propylene-derived repeating unit, and a (C4-C12) alpha-olefin-derived repeating unit, and may include the ethylene-derived repeating unit or the propylene-derived repeating unit. For example, it may be a copolymer of ethylene and propylene, or a random or block copolymer elastomer of an alpha-olefin with one of ethylene and propylene and 1-butene, 1-pentene, 1-hexene, 1-octene, etc., or a combination of these elastomers. More preferably, propylene-ethylene rubber (PER) or ethylene-1-octene rubber (EOR) may be used, and most preferably, the propylene-ethylene rubber (PER) may be used.

The polyolefin elastomer (POE) may be included in an amount of 5 parts by weight to 20 parts by weight, preferably 5 parts by weight to 15 parts by weight. If the content of the polyolefin elastomer (POE) is less than 5 parts by weight, the flexibility of the final resin composition is degraded, and if greater than 20 parts by weight, the electrical properties thereof are degraded.

The atactic polypropylene serves to effectively fill the interface if voids are generated at the interface between the propylene block copolymer and the polyolefin elastomer (POE), and in the present invention, a high-molecular weight atatic polypropylene (PP) having a weight average molecular weight (Mw) of 100,000 g/mol or greater, preferably 120,000 g/mol or greater, and more preferably 120,000 g/mol to 1,000,000 g/mol, may be used.

If the molecular weight of the atactic polypropylene is low, it may cause the dielectric breakdown strength to deteriorate under a high voltage, and if a high tension force is applied, the effect of reducing the whitening phenomenon is not significant.

The atactic polypropylene (PP) may be included in an amount of 5 parts by weight to 20 parts by weight, preferably 5 parts by weight to 15 parts by weight. If the content of the atactic polypropylene (PP) is less than 5 parts by weight, the effect of reducing the whitening phenomenon of the resin composition is insignificant, and if greater than 20 parts by weight, the dielectric breakdown strength is lowered.

In the present invention, the atactic polypropylene (PP) has flexible crystal spherulites, and thus, serves to lower the flexural modulus of the final resin composition, and also, is mixed with a propylene block copolymer including the propylene-ethylene random copolymer, and thus, may exhibit a remarkable effect in reducing the whitening phenomenon and improving the dielectric breakdown strength compared to when mixed with a propylene block copolymer including a propylene homopolymer.

The above-described atactic polypropylene (PP) is an amorphous polypropylene having an isotactisity (Pentad I.I, mmmm) of 5% to 20%, preferably 5% to 15%, which may be prepared according to a method known in the art, and for example, may be prepared with reference to Patent Application No. 2011-0033626 filed by the present applicant, and the patent may be incorporated herein by reference.

In addition to the above-described components, the resin composition according to the present invention may further include one or more additives commonly used when applied to an insulating layer of a power cable, and preferably, may further include an antioxidant, a neutralizer or a water tree inhibitor.

The antioxidant may be added to impart color stability and transparency by suppressing yellowing of the resin composition. Any antioxidant may be used without limitation as long as it can prevent oxidation of the resin composition for an insulating layer of a power cable, but one or more antioxidants selected from the group consisting of a hindered phenol-based antioxidant, 4,4'-thiobis(2-t-butyl-5-methylphenol), 2,2'-thio-diethyl-bis[3-(3,5-di-t-butyl-4-hydroxyphenyl) propionate], 4,4'-thiobis(2-methyl-6-t-butylphenol), 2,2'-thiobis(6-t-butyl-4-methylphenol), octadecyl[3-(3,5-di-t-butyl-4-hydroxyphenyl)propionate], and thiodiethylene-bis[3-(3,5-di-t-butyl-4-hydroxyphenyl) propionate] may be used.

The neutralizer is used to prevent decomposition of a resin composition by effectively removing a catalyst residue remaining after polymerization, and any neutralizer may be used without limitation as long as it can prevent decomposition of the resin composition for an insulating layer of a power cable.

The water tree inhibitor is added for the purpose of preventing water tree, which is a micro-destruction form that occurs due to a combined action of moisture and voltage at a voltage below a breakdown voltage and gradually grows. The water tree phenomenon degrades electrical insulating properties of the insulating layer, thereby causing a decrease in lifespan of the insulating layer. Any water tree inhibitor may be used without limitation as long as it is a material that can reduce a combined action of moisture and voltage.

The polyolefin resin composition for an insulating layer of a power cable according to the present invention may be prepared by mixing and extruding the above-described components according to a typical method known in the art. For example, the above-described components may be introduced into a twin-screw extruder and melt-kneaded to prepare the resin composition.

The resin composition for an insulating layer of a power cable according to the present invention has excellent whitening resistance while satisfying excellent flexibility and electrical properties, is environmentally friendly, and thus, is recyclable, and specifically, as measured according to the following methods, may have a white index of 40 or less, preferably 35 or less, a flexural modulus of 300 MPa to 550 MPa, preferably 350 MPa to 500 MPa, an AC dielectric breakdown strength of 50 kV/mm or greater, preferably 55 kV/mm or greater, an impulse dielectric breakdown strength of 90 kV/mm or greater, preferably 95 kV/mm or greater.

### [Method for measuring white index]

The resin composition is prepared in the form of a sheet having a thickness of 2 mm at 230 °C by using a press molding machine, and then cooled at 10 °C for 5 minutes to prepare a sample (60×45×2 mm), and then the sample is subjected to bending evaluation performed by applying a force of 10 N, and the white index of the sample, which has been subjected to the bending evaluation, is measured according to the ASTM E313 standard by using a spectrophotometry device (Ecolorplus Co., 7000A_IQPC).

### [Method for measuring flexural modulus]

According to the ASTM D790 standard, the support span of a specimen (127×12.7×6.4 mm) is fixed at 100 mm, and a flexural load is applied at a rate of 28 mm/min to determine a measured value as the flexural modulus.

### [Method for measuring dielectric breakdown strength]

The resin composition is prepared in the form of a sheet having a thickness of 1 mm by using a press molding machine, and then cooled at 10 °C for 5 minutes, and then according to the ASTM D149 standard, 30 kV is initially applied for 5 minutes, and thereafter, is increased by 10 kV and maintained for 5 minutes, the process of which is repeated until insulation breakdown occurs, and when the insulation breakdown occurs, the voltage at that time is determined as AC dielectric breakdown strength, and an impact voltage of 80 kV is applied to the sheet in positive/negative polarity 10 times each, and thereafter, the impact voltage is increased by 10 kV and an impulse voltage is applied 3 times, the process of which is repeated until breakdown occurs, and when the insulation breakdown occurs, the voltage at that time is determined as impulse breakdown strength.

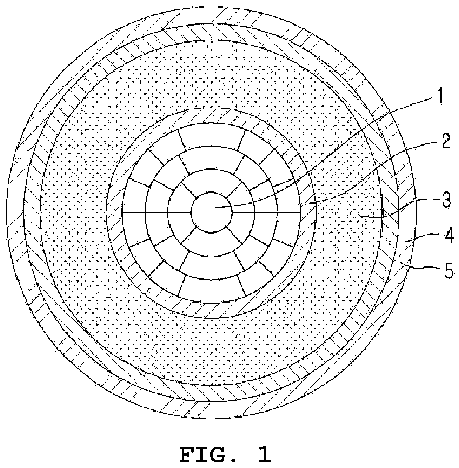

A power cable may be manufactured using the above-described polypropylene resin composition for an insulating layer of a power cable according to the present invention. FIG. 1 schematically shows a cross-section of a power cable manufactured using the resin composition according to the present invention.

Referring to FIG. 1, the power cable manufactured using the resin composition for an insulating layer of a power cable according to the present invention includes a conductor 1, an inner semi-conductive layer 2 surrounding the conductor 1, an insulating layer 3 surrounding the inner semi-conductive layer 2, an outer semi-conductive layer 4 surrounding the insulating layer 3, and a sheath layer surrounding the outer semi-conductive layer 4. Except for the insulating layer, details of each layer constituting the power cable are commonly known to those skilled in the art, so that detailed descriptions thereof will be omitted in the present invention.

Hereinafter, specific preparation examples, examples, and comparative examples according to the present invention will be described.

### Preparation Example 1 : Preparation of propylene block copolymer (Resin 1)

Propylene and ethylene were reacted in a loop reactor to obtain a propylene-ethylene random copolymer, and the propylene-ethylene random copolymer polymerized in the loop reactor, ethylene, and propylene were introduced into a gas phase reactor to perform a copolymerization reaction of ethylene-propylene in a continuous process, thereby preparing a propylene block copolymer. The prepared propylene block copolymer included an ethylene-derived repeating unit in an amount of 1 wt% in the propylene-ethylene random copolymer, 43 wt% in the ethylene-propylene rubber (EPR), and 15 wt% in the total copolymer, and had a xylene soluble content of 29 wt%, a melt index of 1 g/10min, a melting point of 150.7 °C, and an enthalpy of fusion of 67.4 J/g. The melt index, xylene soluble content, melting point, and enthalpy of fusion of the propylene block copolymer were respectively measured according to the following methods.
- Melt Index (MI): Measured under the conditions of a temperature of 230 °C and a load of 2.16 kg according to the ASTM D1238 standard.
- Xylene Soluble (X.S.) : According to the ASTM D5492 standard, the propylene block copolymer was dissolved in boiling xylene, cooled at room temperature, and then separated into portions dissolved in the xylene and portions not dissolved therein, and the portions dissolved in the xylene were separately collected to evaporate the xylene using a hot plate, and the wt% of the remaining portions after the evaporation were measured.
- Melting point and enthalpy of fusion : Using a differential scanning calorimeter (DSC), heating was performed to 200 °C at a rate of 10 °C/min and then cooling was performed to -30 °C, the whole process of which was repeated two times to use data measured after the second time.

### Comparative preparation Example 1 : Preparation of propylene block copolymer (Resin 2)

A propylene block copolymer was prepared in the same manner as in Preparation Example of Resin 1, except that propylene was reacted in the loop reactor to obtain a propylene homopolymer in Preparation Example 1. The prepared propylene block copolymer included an ethylene-derived repeating unit in an amount of 42 wt% in the ethylene-propylene rubber (EPR) and 14 wt% in the total copolymer, and had a xylene soluble content of 29 wt%, a melt index of 1 g/10min, a melting point of 163.7 °C, and an enthalpy of fusion of 77.4 J/g.

### Polyolefin elastomer (POE) (Resin 3)

Propylene-ethylene rubber (PER) (Vistamaxx^{™} 3020FL, Exxonmobil chemical Co., melting point 60.2 °C, specific gravity 0.874) was prepared as a polyolefin elastomer.

### Preparation Example 2 : Preparation of atactic polypropylene (PP) (Resin 4)

Reference was made to Patent Application No. 2011-0033626. At room temperature, the inside of a high-pressure reactor (internal capacity: 2l, stainless steel) was substituted with nitrogen, and about 4.0 mℓ of a methylaluminoxane toluene solution (a solution of 10 wt% of methylaluminoxane in toluene, 6 mmol based on Al, manufacturer: Albemarle) was added to the reactor, followed by adding 500 g of propylene thereto, and the temperature was raised to 70 °C. Subsequently, a solution (1.5 mQ, 3.0 µmol of Ti) in which a transition metal compound represented by Formula 1 was dissolved in toluene was injected into the reactor, and polymerization was performed. After the polymerization reaction was performed, the temperature was lowered to room temperature, excess propylene was removed, and the polymer was recovered. The obtained polymer heated to 80 °C in a vacuum oven and dried for 4 hours or more to prepare atactic polypropylene (xylene soluble content of 98 wt%, MI (230 °C, 2.16 kg load) of 2 g/10 min, Mw(measured by GPC analysis, PL-GPC220, Agilent) of 320,000 g/mol, Tg(glass transition temperature) of -5 °C, I.I.(%, mmmm) of 2).

### Preparation Example 3 : Preparation of atactic polypropylene (PP) (Resin 5)

The amount of propylene input, the amount of catalyst used, the reaction time, etc. were adjusted in Preparation Example 2 to prepare atactic polypropylene having a xylene soluble content of 98 wt%, an MI(230 °C, 2.16 kg load) of 50 g/10 min, an Mw(measured by GPC analysis, PL-GPC220, Agilent) of 120,000 g/mol, a Tg (glass transition temperature) of -5 °C, and an I.I.(%, mmmm) of 1.5.

### Comparative Preparation Example 2: Preparation of atactic polypropylene (Resin 6)

The amount of propylene input, the amount of catalyst used, the reaction time, etc. were adjusted in Preparation Example 2 to prepare atactic polypropylene having a xylene soluble content of 98 wt%, an MI(230 °C, 2.16 kg load) of 100 g/10 min, an Mw(measured by GPC analysis, PL-GPC220, Agilent) of 40,000 g/mol, a Tg (glass transition temperature) of -5 °C, and an I.I.(%, mmmm) of 1.9.

### Examples and Comparative Examples

A mixture composed of component compositions of Table 1 below was mixed for 5 minutes using a mixer, and then extruded using a two-axis extruder under conditions of 190 °C to 230 °C to prepare a resin composition in a pellet phase.

### Test Example

Using the prepared resin composition in a pellet phase, the flexural properties, electrical properties, and white index were measured according to the following methods and the results are shown in Table 1 below.

### [Measurement method]

### (1) Flexural modulus

According to the ASTM D790 standard, the support span of a specimen (127×12.7×6.4 mm) was fixed at 100 mm, and a flexural load was applied at a rate of 28 mm/min to determine a measured value as the flexural modulus. If the flexural modulus is 550 MPa or less, the flexibility and flexural properties are determined to be good, and if the flexural modulus is 500 MPa or less, the same are determined to be excellent.

### (2) Dielectric breakdown strength

The resin composition was prepared in the form of a sheet having a thickness of 1 mm by using a press molding machine, and then cooled at 10 °C for 5 minutes, and then according to the ASTM D149 standard, 30 kV was initially applied for 5 minutes, and thereafter, was increased by 10 kV and maintained for 5 minutes, the process of which was repeated until insulation breakdown occurred, and when the insulation breakdown occurred, the voltage at that time was determined as AC dielectric breakdown strength, and an impact voltage of 80 kV was applied to the sheet in positive/negative polarity 10 times each, and thereafter, the impact voltage was increased by 10 kV and an impulse voltage was applied 3 times, the process of which was repeated until breakdown occurred, and when the insulation breakdown occurred, the voltage at that time was determined as impulse breakdown strength. If the AC dielectric breakdown strength is 50 kV/mm or greater and the impulse dielectric breakdown strength is 90 kV/mm or greater, the electrical properties are determined to be excellent.

### (3) White index (Whitening phenomenon)

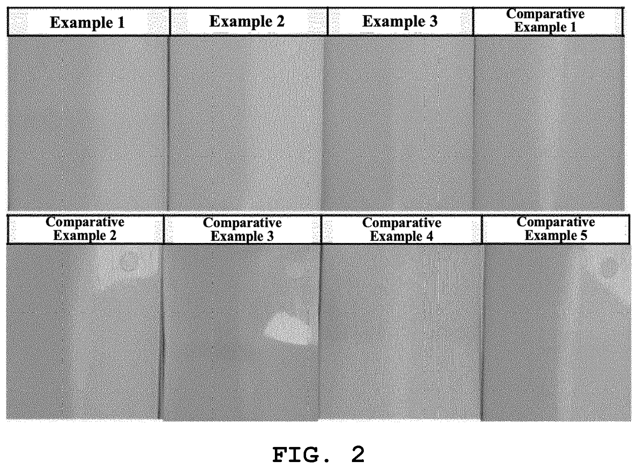

The resin composition was prepared in the form of a sheet having a thickness of 2 mm at 230 °C by using a press molding machine, and then cooled at 10 °C for 5 minutes to prepare a sample (60×45×2 mm), and then the sample was subjected to bending evaluation performed by applying a force of 10 N, and the white index of the sample, which was subjected to the bending evaluation, was measured according to the ASTM E313 standard by using a spectrophotometry device (Ecolorplus Co., 7000A_IQPC). In addition, the cross-section of the specimen which was subjected to the bending evaluation was observed using an optical microscope (observation temperature 134 °C, magnification ×100, 2 min), and the result is shown in FIG. 2.

**[Table 1]**

| Classification | Example 1 | Example 2 | Example 3 | Compara tive | Compara tive | Compara tive | Compara tive | Compar ative |
|---|---|---|---|---|---|---|---|---|
| | | | | Example 1 | Example 2 | Example 3 | Example 4 | Exampl e 5 |
| Resin 1 (parts by weight) | 75 | 80 | 75 | 90 | 87 | 70 | - | 75 |
| Resin 2 (parts by weight) | - | - | - | - | - | - | 75 | - |
| Resin 3 (parts by weight) | 10 | 10 | 10 | 10 | 10 | 10 | 10 | 10 |
| Resin 4 (parts by weight) | 15 | 5 | - | - | 3 | 25 | 15 | - |
| Resin 5 (parts by weight) | - | - | 15 | - | - | - | - | - |
| Resin 6 (parts by weight) | - | - | - | - | - | - | - | 15 |
| Flexural modulus (MPa) | 450 | 500 | 460 | 580 | 560 | 510 | 530 | 470 |
| White index (white index) | 28 | 31 | 30 | 65 | 60 | 33 | 55 | 42 |
| AC dielectric breakdown strength (kV/mm) | 56 | 57 | 56 | 48 | 50 | 53 | 51 | 52 |
| Impulse dielectric breakdown strength (kV/mm) | 95 | 97 | 95 | 71 | 83 | 89 | 85 | 91 |

Referring to Table 1 and FIG. 2 above, the resin compositions (Examples 1 to 3) for an insulating layer of a power cable, the resin compositions using a propylene block copolymer in which ethylene-propylene rubber (EPR) is dispersed in a propylene-ethylene random copolymer and a high molecular weight atactic polypropylene in a polyolefin elastomer are recyclable resin compositions, and it can be confirmed that the resin compositions implement excellent whitening resistance while satisfying excellent flexibility and electrical properties.

On the contrary, it can be seen that when atactic polypropylene was not used (Comparative Example 1), the flexibility, electrical properties, and whitening resistance were all poor, and even when atactic polypropylene was used, if the molecular weight thereof did not reach a certain level (Comparative Example 5), the whitening resistance was not satisfactory, and even when a certain level of high molecular weight atactic polypropylene was used, if the content thereof is too low (Comparative Example 2), the electrical properties and whitening resistance were poor, and when the content thereof was too high (Comparative Example 3 ), the flexural properties were degraded, and when a matrix component of the propylene block copolymer was used as a propylene homopolymer (Comparative Example 4), the electrical properties were not satisfactory and the flexural properties and whitening resistance were significantly degraded.

## Claims

1. A polypropylene resin composition for an insulating layer of a power cable, the polypropylene resin composition comprising:
70 parts by weight to 90 parts by weight of a propylene block copolymer in which ethylene-propylene rubber (EPR) is dispersed in a propylene-ethylene random copolymer;
5 parts by weight to 20 parts by weight of a polyolefin elastomer (POE); and
5 parts by weight to 20 parts by weight of high molecular weight atactic polypropylene (PP) having a weight average molecular weight of 100,000 g/mol or greater.

2. The polypropylene resin composition of claim 1, wherein an ethylene-derived repeating unit of the propylene block copolymer is included in an amount of 0.1 wt% to 5 wt% in the propylene-ethylene random copolymer, is included in an amount of 30 wt% to 60 wt% in the ethylene-propylene rubber (EPR), and is included in an amount of 5 wt% to 25 wt% in the propylene block copolymer.

3. The polypropylene resin composition of claim 1, wherein the propylene block copolymer has a melting point of 150 °C to 170 °C, an enthalpy of fusion of 65 J/g to 85 J/g where melting point and ethalpy of fusion are determined by DSC, a melt index (MI, 230 °C, 2.16 kg load) of 0.1 g/10min to 10 g/10min, and a xylene soluble of 15 wt% to 50 wt% in the propylene block copolymer.

4. The polypropylene resin composition of claim 1, wherein the propylene block copolymer is obtained by reacting propylene and ethylene in a loop reactor to polymerize a propylene-ethylene random copolymer, and then continuously polymerizing propylene and ethylene in a gas phase reactor in the presence of the propylene-ethylene random copolymer to disperse ethylene-propylene rubber (EPR) in the propylene-ethylene random copolymer.

5. The polypropylene resin composition of claim 1, wherein the polyolefin elastomer comprises two or more selected from the group consisting of an ethylene-derived repeating unit, a propylene-derived repeating unit, and a (C4-C12) alpha-olefin-derived repeating unit, and comprises the ethylene-derived repeating unit or the propylene-derived repeating unit.

6. The polypropylene resin composition of claim 1, wherein the resin composition has a white index of 40 or less, as measured according to the following method:
[Method for measuring white index]
wherein the resin composition is prepared in the form of a sheet having a thickness of 2 mm at 230 °C by using a press molding machine, and then cooled at 10 °C for 5 minutes to prepare a sample (60×45×2 mm), and then the sample is subjected to bending evaluation performed by applying a force of 10 N, and the white index of the sample, which has been subjected to the bending evaluation, is measured according to the ASTM E313 standard by using a spectrophotometry device (Ecolorplus Co., 7000A_IQPC) .

7. The polypropylene resin composition of claim 1, wherein the resin composition has a flexural modulus of 300 MPa to 550 MPa, an AC dielectric breakdown strength of 50 kV/mm or greater, and an impulse dielectric breakdown strength of 90 kV/mm or greater, as measured according to the following method:
[Method for measuring flexural modulus]
wherein according to the ASTM D790 standard, the support span of a specimen (127×12.7×6.4 mm) is fixed at 100 mm, and a flexural load is applied at a rate of 28 mm/min to determine a measured value as the flexural modulus;
[Method for measuring dielectric breakdown strength]
wherein the resin composition is prepared in the form of a sheet having a thickness of 1 mm by using a press molding machine, and then cooled at 10 °C for 5 minutes, and then according to the ASTM D149 standard, 30 kV is initially applied for 5 minutes, and thereafter, is increased by 10 kV and maintained for 5 minutes, the process of which is repeated until insulation breakdown occurs, and when the insulation breakdown occurs, the voltage at that time is determined as AC dielectric breakdown strength, and an impact voltage of 80 kV is applied to the sheet in positive/negative polarity 10 times each, and thereafter, the impact voltage is increased by 10 kV and an impulse voltage is applied 3 times, the process of which is repeated until breakdown occurs, and when the insulation breakdown occurs, the voltage at that time is determined as impulse breakdown strength.

8. A power cable comprising the resin composition of any one of claims 1 to 7 as an insulating layer.

## Patentansprüche

1. Polypropylenharzzusammensetzung für eine Isolierschicht eines Stromkabels, wobei die Polypropylenharzzusammensetzung umfasst:
70 Gewichtsteile bis 90 Gewichtsteile eines Propylenblock-Copolymers, in dem Ethylen-Propylen-Kautschuk (EPR) in einem statistischen Propylen-Ethylen-Copolymer dispergiert ist;
5 Gewichtsteile bis 20 Gewichtsteile eines Polyolefin-Elastomers (POE); und
5 Gewichtsteile bis 20 Gewichtsteile hochmolekulares ataktisches Polypropylen (PP) mit einem gewichtsdurchschnittlichen Molekulargewicht von 100.000 g/mol oder mehr.

2. Polypropylenharzzusammensetzung nach Anspruch 1, wobei eine von Ethylen abgeleitete Wiederholungseinheit des Propylenblock-Copolymers in einer Menge von 0,1 Gew.-% bis 5 Gew.-% im statistischen Propylen-Ethylen-Copolymer enthalten ist, in einer Menge von 30 Gew.-% bis 60 Gew.-% im Ethylen-Propylen-Kautschuk (EPR) enthalten ist und in einer Menge von 5 Gew.-% bis 25 Gew.-% im Propylenblock-Copolymer enthalten ist.

3. Polypropylenharzzusammensetzung nach Anspruch 1, wobei das Propylenblock-Copolymer einen Schmelzpunkt von 150 °C bis 170 °C, eine Schmelzenthalpie von 65 J/g bis 85 J/g, wobei der Schmelzpunkt und die Schmelzenthalpie durch DSC bestimmt werden, einen Schmelzindex (MI, 230 °C, 2,16 kg Last) von 0,1 g/10 min bis 10 g/10 min und einen Xylol-Anteil von 15 Gew.-% bis 50 Gew.-% im Propylenblock-Copolymer aufweist.

4. Polypropylenharzzusammensetzung nach Anspruch 1, wobei das Propylenblock-Copolymer erhalten wird, indem Propylen und Ethylen in einem Schleifenreaktor umgesetzt werden, um ein statistisches Propylen-Ethylen-Copolymer zu polymerisieren, und anschließend Propylen und Ethylen in einem Gasphasenreaktor in Gegenwart des statistischen Propylen-EthylenCopolymers kontinuierlich polymerisiert werden, um Ethylen-Propylen-Kautschuk (EPR) in dem statistischen Propylen-Ethylen-Copolymer zu dispergieren.

5. Polypropylenharzzusammensetzung nach Anspruch 1, wobei das Polyolefin-Elastomer zwei oder mehr aus der Gruppe umfasst, die aus einer von Ethylen abgeleiteten Wiederholeinheit, einer von Propylen abgeleiteten Wiederholeinheit und einer von (C4-C12)-alpha-Olefin abgeleiteten Wiederholeinheit besteht, und die von Ethylen abgeleitete Wiederholeinheit oder die von Propylen abgeleitete Wiederholeinheit umfasst.

6. Polypropylenharzzusammensetzung nach Anspruch 1, wobei die Harzzusammensetzung einen Weißindex von 40 oder weniger aufweist, gemessen nach dem folgenden Verfahren:
[Verfahren zur Messung des Weißindex]
wobei die Harzzusammensetzung in Form einer Folie mit einer Dicke von 2 mm bei 230 °C unter Verwendung einer Pressformmaschine vorbereitet und dann für 5 Minuten bei 10 °C abgekühlt wird, um eine Probe (60×45×2 mm) vorzubereiten, und dann die Probe einer Biegebewertung unterzogen wird, die durch Aufbringen einer Kraft von 10 N durchgeführt wird, und der Weißindex der Probe, die der Biegebewertung unterzogen wurde, gemäß dem ASTM E313-Standard unter Verwendung eines Spektralphotometriegeräts (Ecolorplus Co., 7000A_IQPC) gemessen wird.

7. Polypropylenharzzusammensetzung nach Anspruch 1, wobei die Harzzusammensetzung einen Biegemodul von 300 MPa bis 550 MPa, eine Wechselstrom-Durchschlagfestigkeit von 50 kV/mm oder mehr und eine Impuls-Durchschlagfestigkeit von 90 kV/mm oder mehr aufweist, gemessen nach dem folgenden Verfahren:
[Verfahren zur Messung des Biegemoduls]
wobei gemäß dem ASTM D790-Standard die Stützspannweite einer Probe (127×12,7×6,4 mm) auf 100 mm festgelegt wird und eine Biegebelastung mit einer Rate von 28 mm/min aufgebracht wird, um einen Messwert als Biegemodul zu bestimmen;
[Verfahren zur Messung der Durchschlagfestigkeit]
wobei die Harzzusammensetzung in Form einer Folie mit einer Dicke von 1 mm unter Verwendung einer Pressformmaschine vorbereitet und dann für 5 Minuten bei 10 °C abgekühlt wird, und dann gemäß dem ASTM D149-Standard 30 kV zunächst für 5 Minuten angelegt wird, und anschließend um 10 kV erhöht und 5 Minuten lang aufrechterhalten wird, wobei der Vorgang wiederholt wird, bis ein Isolationsdurchschlag eintritt, und wenn der Isolationsdurchschlag eintritt, die Spannung zu diesem Zeitpunkt als Wechselstrom-Durchschlagfestigkeit bestimmt wird, und je 10 mal eine Stoßspannung von 80 kV in positiver/negativer Polarität an die Folie angelegt wird, danach wird die Stoßspannung um 10 kV erhöht und 3 mal eine Stoßspannung angelegt, wobei dieser Vorgang wiederholt wird, bis ein Durchschlag auftritt, und wenn der Isolationsdurchschlag auftritt, wird die Spannung zu diesem Zeitpunkt als Durchschlagfestigkeit bestimmt.

8. Stromkabel, umfassend die Harzzusammensetzung nach einem der Ansprüche 1 bis 7 als Isolierschicht.

## Revendications

1. Composition de résine de polypropylène pour une couche isolante d'un câble d'alimentation, la composition de résine de polypropylène comprenant :
70 parties en poids à 90 parties en poids d'un copolymère séquencé de propylène dans lequel du caoutchouc éthylène-propylène (EPR) est dispersé dans un copolymère aléatoire propylène-éthylène ;
5 parties en poids à 20 parties en poids d'un élastomère polyoléfinique (POE) ; et
5 parties en poids à 20 parties en poids de polypropylène (PP) atactique de haut poids moléculaire, ayant un poids moléculaire moyen en poids supérieur ou égal à 100000 g/mol.

2. Composition de résine de polypropylène selon la revendication 1, dans laquelle un motif répétitif dérivé de l'éthylène du copolymère séquencé de propylène est inclus en une quantité allant de 0,1% en poids à 5% en poids dans le copolymère aléatoire propylène-éthylène, est inclus en une quantité allant de 30% en poids à 60% en poids dans le caoutchouc éthylène-propylène (EPR), et est inclus en une quantité allant de 5% en poids à 25% en poids dans le copolymère séquencé de propylène.

3. Composition de résine de polypropylène selon la revendication 1, dans laquelle le copolymère séquencé de propylène présente un point de fusion allant de 150°C à 170°C, une enthalpie de fusion allant de 65 J/g à 85 J/g, où le point de fusion et l'enthalpie de fusion sont déterminés par DSC, un indice de fluidité à chaud (MI, 230°C, charge de 2,16 kg) allant de 0,1 g/10 min à 10 g/10 min, et une fraction soluble dans le xylène allant de 15% en poids à 50% en poids dans le copolymère séquencé de propylène.

4. Composition de résine de polypropylène selon la revendication 1, dans laquelle le copolymère séquencé de propylène est obtenu en faisant réagir du propylène et de l'éthylène dans un réacteur en boucle pour polymériser un copolymère aléatoire propylène-éthylène, puis en polymérisant en continu du propylène et de l'éthylène dans un réacteur en phase gazeuse en présence du copolymère aléatoire propylène-éthylène afin de disperser du caoutchouc éthylène-propylène (EPR) dans le copolymère aléatoire propylène-éthylène.

5. Composition de résine de polypropylène selon la revendication 1, dans laquelle l'élastomère polyoléfinique comprend deux motifs répétitifs ou plus choisis dans le groupe constitué d'un motif répétitif dérivé de l'éthylène, d'un motif répétitif dérivé du propylène et d'un motif répétitif dérivé d'une alpha-oléfine en (C4 à C12), et comprend le motif répétitif dérivé de l'éthylène ou le motif répétitif dérivé du propylène.

6. Composition de résine de polypropylène selon la revendication 1, dans laquelle la composition de résine présente un indice de blancheur inférieur ou égal à 40, tel que mesuré selon la méthode suivante :
[Méthode de mesure de l'indice de blancheur]
dans laquelle la composition de résine est préparée sous la forme d'une feuille ayant une épaisseur de 2 mm à 230°C en utilisant une machine de moulage à la presse, puis refroidie à 10°C pendant 5 minutes pour préparer un échantillon (60 × 45 × 2 mm), puis l'échantillon est soumis à une évaluation de la flexion réalisée en appliquant une force de 10 N, et l'indice de blancheur de l'échantillon, qui a été soumis à l'évaluation de flexion, est mesuré conformément à la norme ASTM E313 en utilisant un dispositif de spectrophotométrie (Ecolorplus Co., 7000A_IQPC).

7. Composition de résine de polypropylène selon la revendication 1, dans laquelle la composition de résine présente un module de flexion allant de 300 MPa à 550 MPa, une rigidité diélectrique en courant alternatif supérieure ou égale à 50 kV/mm, et une rigidité diélectrique sous tension de choc supérieure ou égale à 90 kV/mm, telles que mesurées selon la méthode suivante :
[Méthode de mesure du module de flexion]
dans laquelle, conformément à la norme ASTM D790, la portée d'appui d'un spécimen (127 × 12,7 × 6,4 mm) est fixée à 100 mm, et une charge de flexion est appliquée à une vitesse de 28 mm/min afin de déterminer une valeur mesurée comme étant le module de flexion ;
[Méthode de mesure de la rigidité diélectrique]
dans laquelle la composition de résine est préparée sous la forme d'une feuille ayant une épaisseur de 1 mm en utilisant une machine de moulage à la presse, puis refroidie à 10°C pendant 5 minutes, et ensuite, conformément à la norme ASTM D149, une tension de 30 kV est d'abord appliquée pendant 5 minutes, puis augmentée de 10 kV et maintenue pendant 5 minutes, ce processus étant répété jusqu'à ce qu'un claquage d'isolation se produise, et lorsque le claquage d'isolation se produit, la tension à ce moment-là est déterminée comme étant la rigidité diélectrique en courant alternatif, et une tension d'impact de 80 kV est appliquée à la feuille avec une polarité positive/négative, 10 fois chacune, ensuite, la tension d'impact est augmentée de 10 kV et une tension de choc est appliquée 3 fois, ce processus étant répété jusqu'à ce qu'un claquage se produise, et lorsque le claquage d'isolation se produit, la tension à ce moment-là est déterminée comme étant la résistance au claquage sous tension de choc.

8. Câble d'alimentation comprenant la composition de résine selon l'une quelconque des revendications 1 à 7 en tant que couche isolante.
